# EUROPEAN PATENT SPECIFICATION

(11) **EP 1 460 704 B1**
(45) Date of publication and mention of the grant of the patent: **17.12.2008**
(21) Application number: 04101150.3
(22) Date of filing: 19.03.2004
(51) Int. Cl.: H01M 8/04

(54) **Method of restoring performance of a fuel cell by providing reverse current pulses and corresponding fuel cell system**
Verfahren zur Wiederherstellung der Leistung einer Brennstoffzelle durch Verwendung von Stromumkehrpulsen und entsprechendes Brennstoffzellensystem
Méthode de restauration de la performance d'une pile à combustible par l'utilisation de impulsions de courant inverse et système de pile à combustible correspondant

(30) Priority: 21.03.2003 US 394822
(43) Date of publication of application: 22.09.2004
(73) Proprietor: BOSE CORPORATION, Framingham, Massachusetts 01701-9168 (US)
(72) Inventor: Carreras, Ricardo F., 01701-9168, Framingham (US); Lin, Lifun, 01701-9168, Framingham (US)
(74) Representative: Brunner, Michael John

(56) References cited:
- EP-A- 0 701 294
- WO-A-03/067695
- DE-A- 10 020 126
- DE-A- 10 134 193
- FEDKIW P S ET AL: "PULSED-POTENTIAL IXIDATION OF METHANOL" JOURNAL OF THE ELECTROCHEMICAL SOCIETY, ELECTROCHEMICAL SOCIETY. MANCHESTER, NEW HAMPSHIRE, US, vol. 135, no. 10, 1 October 1988 (1988-10-01), pages 2459-2465, XP002069148 ISSN: 0013-4651

## Description

The present invention relates to fuel cells and more particularly concerns novel systems and methods for providing reverse current charging to a fuel cell.

### BACKGROUND OF THE INVENTION

Fuel cells are electrochemical devices that produce usable electricity by converting chemical energy to electrical energy. A typical fuel cell includes positive and negative electrodes separated by an electrolyte (e.g., a polymer electrolyte membrane (PEM)). In a typical direct methanol fuel cell (DMFC), a fuel, such as hydrogen or methanol, supplied to the negative electrode diffuses to the anode catalyst and dissociates into protons and electrons. The protons pass through the PEM to the cathode, and the electrons travel through an external circuit to supply power to a load.

### SUMMARY OF THE INVENTION

According to DE 10134193, DE 10020126 and EP-A-0701294 there is provided a method of treating a fuel cell having an anode, an electrolyte and a cathode, the method comprising:
supplying fuel to said anode;
supplying oxidizer to said cathode;

The present invention is characterised by
intermittently providing reverse current charging to said fuel cell through said anode and cathode.

According to a second aspect of the present invention there is provided a system for operating a fuel cell, comprising:
a fuel cell having an anode, an electrolyte and a cathode,
an external power supply circuit connecting said anode and cathode,
a first supplier for supplying a fuel to said anode;
a second supplier for supplying oxidizer to said cathode; characterised by
a controller for intermittently providing reverse current charging to said fuel cell through said anode and cathode via said external power supply circuit.

It is preferable to increase air flow rate at the cathode.

The invention includes a power supply and may include an energy storage device that provides reverse current charging to the fuel cell while supporting the load when fuel cell operation is interrupted, and during normal operation the fuel cell recharges the energy storage element.

Other features, objects, and advantages of the invention will be apparent from the following description when read in connection with the accompanying drawings in which:

### BRIEF DESCRIPTION OF THE DRAWINGS

FIG. 1 shows a system block diagram of an operating fuel cell in accordance with the invention;
FIG. 2 shows a graph of voltage versus time, which demonstrates the effect of pretreatment of a fuel cell using reverse current charging according to the invention;
FIG. 3 shows a graph of voltage versus time, which demonstrates the improvement in long-term decay of the fuel cell voltage using reverse current charging according to the invention; and
FIG. 4 shows a graph of voltage versus time, which shows restoration of fuel cell voltage after cell reversal using reverse current charging according to the invention.

Like reference symbols in the various views indicate like elements.

### DETAILED DESCRIPTION

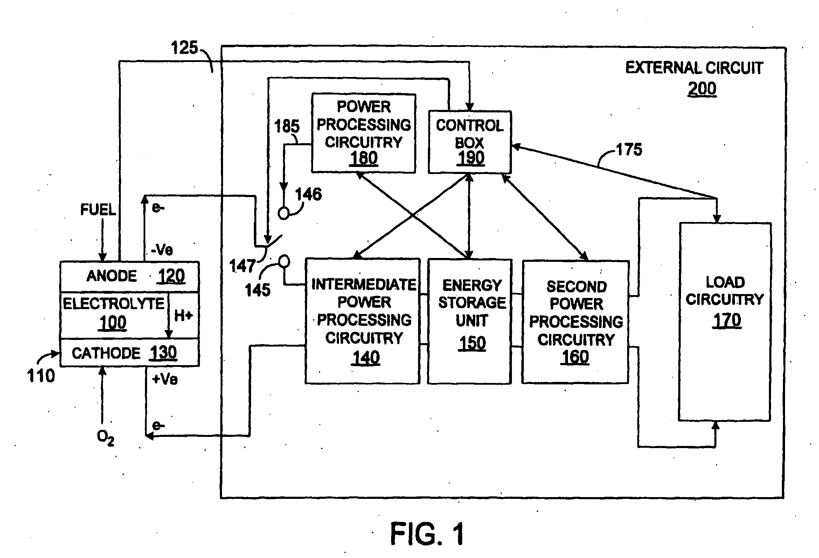

The method and system of the invention will be illustrated with reference to a direct methanol fuel cell (DMFC). However, the methods and system are applicable to any type of fuel cell including, but not limited to, fuel cells that utilize carbon based fuels, such as methanol and ethanol. It also applies to hydrogen fuel cells that utilize either pure hydrogen or hydrogen contaminated with carbon monoxide (CO) as fuel. Referring to FIG. 1, there is shown a system block diagram of a DMFC 110 in operation which methanol supplied to a negative electrode (anode) 120 that is electrochemically oxidized to produce electrons (e-) and protons (H⁺). The protons move through an electrolyte 100 to the cathode 130. The electrolyte 100 can be in the form of a solid polymer electrolyte membrane (PEM). The electrons travel through the external circuit 200 (described below) to the positive electrode (cathode) 130, where they react with oxygen (or an oxidizer) and the protons that have been conducted through the PEM to form water and heat. Oxygen can be supplied to the cathode 130 by a variety of methods, such as, for example, flowing air or carrying via a liquid. An oxidizer can be used to oxidize and/or deliver oxygen via a fluid or gas to the cathode. Many possible oxidizers, for example, potassium chlorate (KC10₃) and sodium chlorate (NaC10₃), can decompose and release oxygen when heated. Hydrogen peroxide (in a liquid form) also can decompose and release oxygen when contacting catalyst or acid. Although these oxidizers can directly contact the cathode and react with electrons to complete the reduction reaction, they can also be decomposed first, and then released oxygen is delivered to cathode.

The electrodes are in contact with each side of the PEM and are typically in the form of carbon paper that is coated with a catalyst, such as platinum (Pt) or a mixture of platinum and ruthenium or a platinum ruthenium alloy (Pt-Ru). The electrochemical reactions occurring at the anode and cathode can be illustrated as follows:

| | |
|---|---|
| Anode (oxidation half-reaction) | CH₃OH + H₂O→ CO₂ + 6H⁺ + 6e⁻ |
| Cathode (reduction half-reaction) | 3/2 O₂ + 6H⁺ + 6e⁻ → 3H₂O |
| Net reaction | CH₃OH + 3/2 O₂→ CO₂ + 2H₂O |

The electrons generated at the anode travel through the external circuit 200 that includes power processing circuitry and load circuitry (discu ssed below). The external circuit 200 includes an energy storage unit 150, which can include, e.g., a battery and/or capacitors. The energy from the fuel cell can be saved in the energy storage unit 150. The external circuit 200 optionally can include first intermediate power processing circuitry 140, which conditions the power from the fuel cell to properly supply the energy storage unit 150, if necessary. The first intermediate power processing circuitry can include, e.g., a DC/DC convertor. The energy saved in energy storage unit 150 can be used to feed load circuitry 170 (e.g., a portable electronic device) via optional second power processing circuitry 160. Second power processing circuitry 160 may provide further power conditioning on the output from 150 depending on the requirements of the load circuitry 170, and may include, e.g., a DC/DC or a DC/AC converter. The combination of first power processing circuitry 140, second power processing circuitry 160, and energy storage unit 150 provide power to the load circuit 170.

Fuel cell interruption can be provided by the interaction of power processing circuitry 180, second processing circuitry 160, energy storage unit 150, and control box 190. Circuitry 180 and control box 190 may comprise a hardwa re module, a software module, or combination thereof. The circuitry 180 draws power from energy storage unit 150 by providing a reverse current 185 to the fuel cell via switch or relay 147. Circuitry 180 provides reverse current to the fuel cell by injecting a current, which is opposite to the normal fuel cell discharge current. Therefore, during reverse current charging, the cathode potential is higher than during normal operation, and the anode potential is lower than during normal operation. Switch or relay 147 is connected to terminal 145 for normal fuel cell operation. Switch or relay 147 connects to switch terminal 146 during reverse current charging, and power from saved energy in energy storage unit 150 is provided to circuitry 180. Energy storage unit 150 continues to provide power to load 170 via second power processing circuitry 160 during reverse current charging. Control box 190 draws power from energy storage unit 150 and controls how circuit 180 provides reverse current pulses to the system. The reverse current charge is related to the number of reverse current pulses and the duration of each pulse, and depends on the fuel cell specification, fuel cell operation status, fuel cell performance, and external circuitry operating conditions. The control box 190 can provide periodic reverse current charging to the fuel cell to improve fuel cell performance depending on the fuel cell operating status (i.e., whether the fuel cell requires pretreatment, is in reversal condition, or has been operating for a long time and a decay in performance has been observed). Control box 190 monitors a variety of cell performance parameters, such as the fuel cell voltage, load current 175, power processing circuitry 160, and energy storage unit 150, fuel cell operating status via status line 125, fuel cell reversal by monitoring the fuel supply status, operating time elapse, and long-term performance decay.

The reverse current charge pulses applied to the fuel cell can be controlled per monitored parameters via circuitry 180 and switch or relay 147. For example, the control box 190 can disable power processing circuitry 140 during reverse current charging. When a decay in fuel cell output voltage is observed, control box 190 can initially provide a rapid series of reverse current pulses to the cell to increase the level of fuel cell power output. The reverse current pulses can then be adjusted to be less frequent as determined by monitored cell performance, i.e., due to an observed increase and stabilization in cell output. Generally, the fuel cell is constructed and arranged to provide steady power to the load circuitry 170, and the extra energy saved in the power supply 150 can be further used to satisfy peak power demand from the load circuit 170.

### EXAMPLES

Membrane electrode assemblies (MEA) were fabricated or purchased from commercial sources. An MEA was tested in a single cell with 16cm² active area. The experiments were conducted using 1 M methanol solution and compressed air. The reverse current was typically the same as the load current. The duration of reverse current charging ranged from a few seconds to several minutes. During charging, the cell voltage was greater than the open circuit voltage, with the cathode under oxidation and the anode under reduction conditions.

MEA's were prepared as follows: Pt-Ru black (Johnson Matthey, London, UK) was mixed with a 5wt% NAFION solution (Electrochem Inc, Woburn, MA) and water to form an ink. The anode electrode was then prepared by applying a layer of th e obtained ink to a pre-teflonated (10wt%) carbon paper (Toray, Torayca, Japan). A similar process was used to prepare the cathode, except that the Pt was used instead of PtRu black (Johnson Matthey, London, UK). The complete MEA was fabricated by bondin g the anode electrode and the cathode electrode to a NAFION® (Dupont, Wilmington, DE) membrane. The MEA was assembled for testing between two heated graphite blocks with fuel and air feed.

### Example 1

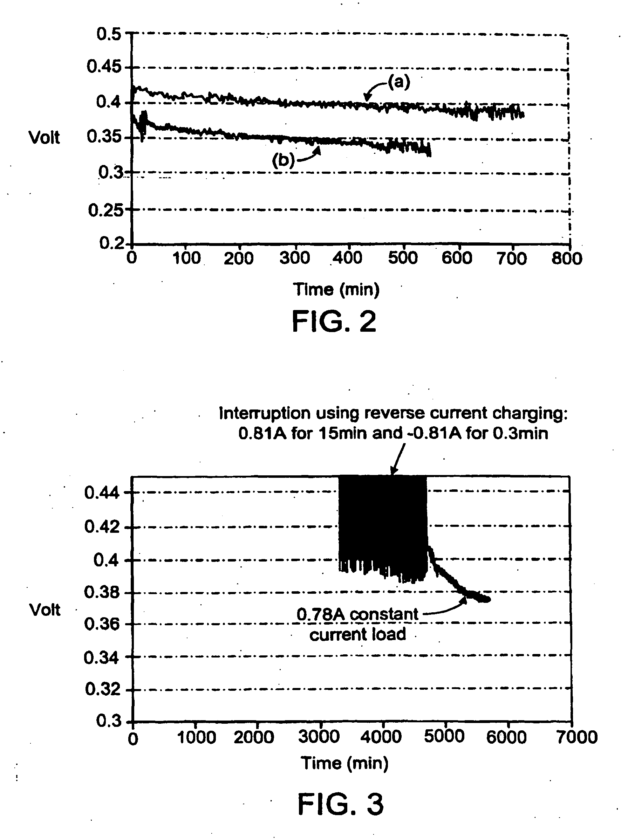

This example demonstrates performance improvement via pretreatment of a fuel cell prepared in accordance with the invention. As demonstrated in FIG.2, after reverse current was applied briefly to a MEA, performance of the MEA after pre-treatment (curve (a) in FIG.2) improved significantly compared to the pe rformance prior to the brief reverse current charging pre-treatment (curve (b) in FIG.2).

The MEA was fabricated in-house with 4.5mg/cm² of Pt-Ru and 3mg/cm² of Pt. NAFION® N117 was used as the electrolyte membrane (Dupont, Wilmington, DE). The performance (output voltage) of the freshly made MEA was tested at 70 °C with 2 A loading, both before and after pre-treatment.

The pretreatment via brief reverse current charging was done as follows: the reverse current charging was carried out on the MEA by periodically applying a 2 A, 18 second reverse current pulse a total of six times over a 180 minute period. When not being reverse current charged, the cell output current was maintained at 2A. The power improvement was 15% (a 15% voltage improvement as shown in FIG.2 under constant output current conditions translates into a 15% power improvement). Note that power was provided by the cell at higher voltage after reverse current charging.

### Example 2

This example demonstrates the effect of periodic reverse current charging on slowing down long-term fuel cell performance decay. Fuel cells are typically operated under constant load, i.e. in constant current mode. Long term operation in this mode results in a decay in the output voltage of the cell. In this example, the fuel cell operation was periodically interrupted manually and reverse current charging pulses were applied. In an operating system, these functions are provided by the system of FIG. 1, where switch 147 is periodically switched between positions 145 and 146 via circuitry 180 and control box 190.

The MEA tested was prepared with 2.2 mg/cm² Pt-Ru (Johnson-Matthey) on the anode side, 3.3 mg/cm² Pt on the cathode side, with a NAFION® N117 membrane. Teflonized Toray carbon paper was used as the gas diffusion electrode. The cell was tested at 42 °C and with 550 cc/min air flow. The fuel cell operation was interrupted via interrupting load current by disconnecting the fuel cell from the load (0.78A). During interruption, reverse current pulses were applied via an external power supply circuit.

The cell was tested for a first period of time with a current discharge/charge cycle of 0.81A /15 min discharge followed by -0.81A/ 0.3 min of reverse current charging. The cell was then further tested for a second period of time consisting solely of constant current discharge of 0.78A. The curve of FIG. 3 shows the output of the cell under test, for both periods of time. The cell experienced a performance decay of only 0.5mV/hr during the time in which periodic interruption and reverse current charging occurred vs. a performance decay of approximately 3mV/hr for period of time in which constant current operation was occurring.

Note that the current discharge for the period of time during which periodic r everse current charging was occurring was maintained at a higher level (0.81A) than it was during the period of time when the cell was operated under constant current load (0.78A). This is done to ensure that sufficient energy is available during the reverse current charging period to satisfy the load 170 and the energy demand from the reverse current charging circuit 180.

### Example 3

This example describes restoration of fuel cell performance after cell reversal has occurred. During long term operation of a fuel cell, it is possible for the output voltage of one or more cells contained in a large cell stack to become reversed. When this occurs, the cell output voltage becomes negative. That is, during cell reversal, the anode becomes more positive than the cathode. One common cause for reversal is reactant depletion. Although cell reversal can be caused by depletion of reactants in either the anode or cathode, the greatest problem occurs when the anode fuel is restricted. For example, without fuel in the anode, carbon corrosion will occur and the anode catalyst can be damaged by excessive oxidation. The cell can be revived, however, using the current reversal procedure in accordance with the invention.

Cell reversal was simulated by occasionally operatin g a cell without fuel until the cell voltage became negative. It was discovered that by briefly applying a reverse current to the cell, the cell decay could be reduced and most of the cell performance could be restored.

An MEA was first tested with a defined load (discharge current), which is described below. After the cell voltage stabilized, the fuel pump was turned off, while forcing the same amount of current through the cell, for a period of time which was long enough to cause cell damage. The cell damage caused by cell reversal was determined to have occurred if the cell voltage after the fuel source was restored was lower than the original cell voltage under the same output current density condition.

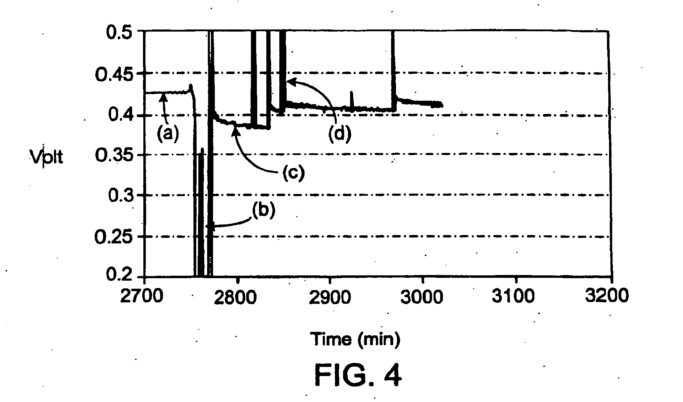

The MEA was purchased from Lynntech (College Station, TX) with catalyst precoated on the membranes. The anode contained 4mg/cm² Pt -Ru, and the cathode contained 4mg/cm² Pt. This MEA was tested with teflonized carbon paper as the anode gas diffusion electrode and gold mesh as the cathode gas diffusion electrode using 600 cc/min of airflow. FIG. 4 shows the fuel cell performance curve (voltage vs. time) at 1A load at 70°C. After testing for a period of time (curve (a) in FIG. 4), the fuel delivery pump was turned off while the same amount of current was forced out of the cell. After a few minutes, the cell voltage became reversed (curve (b) in FIG. 4). The anode was more positive than the cathode with a cell voltage output of -1.7V. When the fuel pump was turned on and fuel delivery restored, the outpu t voltage was significantly lower than before cell reversal (curve (c) in FIG. 4). After applying a few brief reverse current charging pulses, most of the cell voltage was recovered (curve (d) in FIG. 4).

### Example 4

This example describes combining reverse current charging with increased air flow rate

Using the MEA prepared in Example 1, the reverse current charging was tested at an air flow rate of 200cc/min and 600cc/min. Before reverse current charging, the MEA had a lower voltage output at higher air flow rate. After reverse current charging, the MEA had a higher voltage output at higher air flow rate than the MEA at the lower air flow rate.

There has been described novel apparatus and techniques for improving fuel cell performance. It is evident that those skilled in the art may now make numerous modifications of and departures from the specific embodiments described herein without departing from the inventive concepts. Consequently, the invention is to be construed as embracing each and every feature and novel combination of features present in or possessed by the apparatus and techniques herein disclosed and limited solely by the scope of the appended claims.

## Claims

1. A method of treating a fuel cell (110) having an anode (120), an electrolyte (100) and a cathode (130), the method comprising:
supplying fuel to said anode (120);
supplying oxidizer to said cathode (130); **characterised by**
intermittently providing reverse current charging to said fuel cell (110) through said anode (120) and cathode (130).

2. The method of claim 1, further including monitoring operating conditions of said fuel cell (110).

3. The method of claim 2, wherein monitoring operating conditions includes monitoring the performance of said fuel cell (110).

4. The method of claim 2 or claim 3, wherein said reverse current charging occurs when monitoring operating conditions of said fuel cell (110) indicates performance decay of said fuel cell.

5. The method of any of claims 2 to 4, wherein monitoring operating conditions includes monitoring the voltage of said fuel cell (110).

6. The method of any of claims 1 to 5, wherein intermittently providing reverse current charging controls the amount of reverse current charge received by said fuel cell (110).

7. The method of any of claims 1 to 5, wherein intermittently providing reverse current charging includes selecting a specific number of reverse current pulses and the duration of each reverse current pulse.

8. The method of claim 7, further including selecting said specific number of reverse current pulses and duration of each pulse in accordance with the monitored fuel cell (110) operating conditions.

9. The method of any of claims 1 to 8, wherein intermittently providing reverse current charging increases the amount of charge received by said fuel cell (110) when said monitored fuel cell performance deteriorates.

10. The method of any of claims 1 to 8, wherein intermittently providing reverse current charging decreases the amount of charge received by said fuel cell (110) when said monitored fuel cell performance improves.

11. The method of any of claims 1 to 10, wherein supplying oxidizer to said cathode (130) is via air flowing.

12. The method of claim 11, wherein intermittently providing reverse current charging further includes increasing the rate of air flowing when supplying oxidizer to said cathode (130).

13. The method of any of claims 1 to 10, wherein supplying oxidizer to said cathode (130) is via a liquid.

14. The method of any of claims 1 to 12, wherein said oxidizer is oxygen gas from air.

15. The method of claim 1, wherein said oxidizer is oxygen from decomposing potassium chlorate.

16. The method of claim 1, wherein said oxidizer is oxygen from decomposing sodium chlorate.

17. The method of claim 1, wherein said oxidizer is oxygen from decomposing hydrogen peroxide.

18. The method of any of claims 1 to 17, which is applied to pre-treat said fuel cell (110).

19. The method of any of claims 1 to 17, which is applied to restore performance of said fuel cell (110).

20. The method of claim 2 or any of claims 3 to 17 when dependent thereon, further including
applying said reverse current charging to said fuel cell (110) via an external power supply circuit, according to the monitored operating conditions.

21. The method of claim 20, wherein operating said fuel cell (110) to provide power furnishes power to said external power supply circuit which further provides power to an external load circuit.

22. The method of claim 20, further including monitoring the operating condition of an external power supply circuit.

23. The method of claim 20, further including monitoring the operating condition of an external load circuit.

24. The method of claim 20, wherein an external power supply circuit provides power to a load circuit when selectively providing reverse current charging to said fuel cell (110).

25. A system for operating a fuel cell (110), comprising:
a fuel cell (110) having an anode (120), an electrolyte (100) and a cathode (130),
an external power supply circuit connecting said anode (120) and cathode (130),
a first supplier for supplying a fuel to said anode (120);
a second supplier for supplying oxidizer to said cathode (130); **characterised by**
a controller (190) for intermittently providing reverse current charging to said fuel cell (110) through said anode (120) and cathode (130) via said external power supply circuit.

26. The system of claim 25, wherein said fuel cell (110) consumes a carbon based fuel cell.

27. The method of claim 26, wherein said carbon based fuel cell (110) is a direct methanol fuel cell (DMFC).

28. The system of claim 25, wherein said fuel cell (110) is a hydrogen fuel cell.

29. The system of claim 28, wherein said hydrogen fuel cell uses pure hydrogen as fuel.

30. The system of claim 28, wherein said hydrogen fuel cell uses hydrogen contaminated with carbon monoxide (CO) as fuel.

31. The system of any of claims 25 to 30, wherein said controller is constructed and arranged to monitor the performance and operating status of said fuel cell (110).

32. The system of any of claims 25 to 31, wherein said controller is constructed and arranged to monitor an external load circuit current.

33. The system of claim 25, wherein said second supplier supplies oxidizer to said cathode (130) via flowing air.

34. The system of claim 25, wherein said second supplier supplies oxidizer to said cathode (130) via a liquid.

35. The system of claim 25, wherein said oxidizer is oxygen gas from air.

36. The system of claim 25, wherein said oxidizer is oxygen from decomposing potassium chlorate.

37. The system of claim 25, wherein said oxidizer is oxygen from decomposing sodium chlorate.

38. The system of claim 25, wherein said oxidizer is oxygen from decomposing hydrogen peroxide.

39. A power system for converting fuel to electricity, comprising:
a system according to any of claims 25 to 38;
an external power supply circuit connecting said anode and cathode (130); and an external load circuit connected to said anode and cathode

## Patentansprüche

1. Verfahren zum Behandeln einer Brennstoffzelle (110), die eine Anode (120), einen Elektrolyt (100) und eine Kathode (130) aufweist, wobei das Verfahren umfasst:
Zuführen von Brennstoff an die Anode (120);
Zuführen von Oxidationsmittel an die Kathode (130);
**gekennzeichnet durch**
intermittierendes Vorsehen von Stromumkehrladen der Brennstoffzelle (110) über die Anode (120) und Kathode (130).

2. Verfahren nach Anspruch 1, das ferner ein Überwachen von Betriebsbedingungen der Brennstoffzelle (110) umfasst.

3. Verfahren nach Anspruch 2, bei dem das Überwachen von Betriebsbedingungen eine Überwachung der Leistung der Brennstoffzelle (110) umfasst.

4. Verfahren nach Anspruch 2 oder Anspruch 3, bei dem das Stromumkehrladen auftritt wenn eine Überwachung von Betriebsbedingungen der Brennstoffzelle (110) einen Leistungsabfall der Brennstoffzelle anzeigt.

5. Verfahren nach einem der Ansprüche 2 bis 4, wobei das Überwachen von Betriebsbedingungen eine Überwachung der Spannung der Brennstoffzelle (110) umfasst.

6. Verfahren nach einem der Ansprüche 1 bis 5, wobei das intermittierende Vorsehen von Stromumkehrladen die Menge an Stromumkehrladung steuert, welche von der Brennstoffzelle (110) aufgenommen wird.

7. Verfahren nach einem der Ansprüche 1 bis 5, wobei das intermittierende Vorsehen von Stromumkehrladen ein Auswählen einer spezifischen Anzahl an Stromumkehrpulsen und der Dauer der jeweiligen Stromumkehrpulse umfasst.

8. Verfahren nach Anspruch 7, das ferner ein Auswählen der spezifischen Anzahl an Stromumkehrpulsen und der Dauer der jeweiligen Pulse gemäß der überwachten Betriebsbedingungen der Brennstoffzelle (110) umfasst.

9. Verfahren nach einem der Ansprüche 1 bis 8, bei dem das intermittierende Vorsehen von Stromumkehrladen die Menge an von der Brennstoffzelle (110) aufgenommener Ladung vergrößert wenn die überwachte Leistung der Brennstoffzelle abfällt.

10. Verfahren nach einem der Ansprüche 1 bis 8, bei dem das intermittierende Vorsehen von Stromumkehrladen die Menge an von der Brennstoffzelle (110) aufgenommener Ladung verringert wenn die überwachte Leistung der Brennstoffzelle zunimmt.

11. Verfahren nach einem der Ansprüche 1 bis 10, wobei das Zuführen von Oxidationsmittel an die Kathode (130) über Luftstrom geschieht.

12. Verfahren nach Anspruch 11, bei dem das intermittierende Vorsehen von Stromumkehrladen ferner eine Erhöhung der Rate der Luftströmung umfasst wenn Oxidationsmittel der Kathode (130) zugeführt wird.

13. Verfahren nach einem der Ansprüche 1 bis 10, bei dem das Zuführen von Oxidationsmittel an die Kathode (130) über eine Flüssigkeit geschieht.

14. Verfahren nach einem der Ansprüche 1 bis 12, bei dem das Oxidationsmittel Sauerstoffgas aus der Luft ist.

15. Verfahren nach Anspruch 1, bei dem das Oxidationsmittel Sauerstoff aus einer Zersetzung von Kaliumchlorat ist.

16. Verfahren nach Anspruch 1, bei dem das Oxidationsmittel Sauerstoff aus einer Zersetzung von Natriumchlorat ist.

17. Verfahren nach Anspruch 1, bei dem das Oxidationsmittel Sauerstoff aus einer Zersetzung von Wasserstoffperoxid ist.

18. Verfahren nach einem der Ansprüche 1 bis 17, das angewendet wird, um die Brennstoffzelle (110) vorzubehandeln.

19. Verfahren nach einem der Ansprüche 1 bis 17, das angewendet wird, um die Leistungsfähigkeit der Brennstoffzelle (110) wiederherzustellen.

20. Verfahren nach Anspruch 2 oder einem der Ansprüche 3 bis 17 soweit diese sich auf Anspruch 2 rückbeziehen, das ferner umfasst:
Anwenden des Stromumkehrladens der Brennstoffzelle (110) über einen externen Stromzufuhrkreis gemäß den überwachten Betriebsbedingungen.

21. Verfahren nach Anspruch 20, bei dem der Betrieb der Brennstoffzelle (110) um Strom zu liefern Strom an den externen Stromzufuhrkreis liefert, welcher ferner Strom an einen externen Ladekreis liefert.

22. Verfahren nach Anspruch 20, das ferner ein Überwachen der Betriebsbedingungen eines externen Stromzufuhrkreises umfasst.

23. Verfahren nach Anspruch 20, das ferner ein Überwachen der Betriebsbedingungen eines externen Ladekreises umfasst.

24. Verfahren nach Anspruch 20, bei dem ein externer Stromzufuhrkreis Strom an einen Ladekreis liefert wenn die Brennstoffzelle (110) selektiv stromumkehrgeladen wird.

25. System zum Betreiben einer Brennstoffzelle (110), umfassend:
eine Brennstoffzelle (110) mit einer Anode (120), einem Elektrolyt (100) und einer Kathode (130),
einen an der Anode (120) und Kathode (130) angeschlossenen externen Stromzufuhrkreis,
einen ersten Versorger zum Zuführen von Brennstoff an die Anode (120);
einen zweiten Versorger zum Zuführen von Oxidationsmittel an die Kathode (130);
**gekennzeichnet durch**
ein Steuermittel (190) zum intermittierenden Vorsehen von Stromumkehrladen der Brennstoffzelle (110) **durch** die Anode (127) und Kathode (130) über den externen Stromzufuhrkreis.

26. System nach Anspruch 25, bei dem die Brennstoffzelle (110) eine kohlenstoffbasierte Brennstoffzelle verbraucht.

27. Verfahren nach Anspruch 26, bei dem die kohlenstoffbasierte Brennstoffzelle (110) eine DMFC-Brennstoffzelle (Direct Methanol Fuel Cell) ist.

28. System nach Anspruch 25, bei dem die Brennstoffzelle (110) eine Wasserstoffbrennstoffzelle ist.

29. System nach Anspruch 28, bei dem die Wasserstoffbrennstoffzelle reinen Wasserstoff als Brennstoff verwendet.

30. System nach Anspruch 28, bei dem die Wasserstoffbrennstoffzelle mit Kohlenmonoxid (CO) kontaminierten Wasserstoff als Brennstoff verwendet.

31. System nach einem der Ansprüche 25 bis 30, bei dem das Steuermittel so ausgelegt und eingerichtet ist, dass es die Leistung und den Betriebszustand der Brennstoffzelle (110) überwacht.

32. System nach einem der Ansprüche 25 bis 31, bei dem das Steuermittel so ausgelegt und eingerichtet ist, dass es einen externen Ladekreisstrom überwacht.

33. System nach Anspruch 25, bei dem der zweite Versorger Oxidationsmittel an die Kathode (130) über strömende Luft zuführt.

34. System nach Anspruch 25, bei dem der zweite Versorger Oxidationsmittel an die Kathode (130) über eine Flüssigkeit zuführt.

35. System nach Anspruch 25, bei dem das Oxidationsmittel Sauerstoffgas aus Luft ist.

36. System nach Anspruch 25, bei dem das Oxidationsmittel Sauerstoff aus einer Zersetzung von Kaliumchlorat ist.

37. System nach Anspruch 25, bei dem das Oxidationsmittel Sauerstoff aus einer Zersetzung von Natriumchlorat ist.

38. System nach Anspruch 25, bei dem das Oxidationsmittel Sauerstoff aus einer Zersetzung von Wasserstoffperoxid ist.

39. Ein Stromversorgungssystem zum Umwandeln von Brennstoff in Elektrizität, umfassend:
ein System nach einem der Ansprüche 25 bis 38;
einen externen Stromzufuhrkreis, der mit der Anode und Kathode (130) verbunden ist; und einen externen Ladekreis, der mit der Anode und Kathode verbunden ist.

## Revendications

1. Procédé de traitement d'une pile à combustible (110) ayant une anode (120), un électrolyte (100) et une cathode (130), le procédé comprenant :
le fait de fournir du combustible à ladite anode (120) ;
le fait de fournir un oxydant à ladite cathode (130) ;
**caractérisé par**
le fait de fournir par intermittence une charge à courant inverse à ladite pile à combustible (110) par le biais de ladite anode (120) et ladite cathode (130).

2. Procédé selon la revendication 1, comprenant en outre la surveillance des conditions de fonctionnement de ladite pile à combustible (110).

3. Procédé selon la revendication 2, dans lequel la surveillance des conditions de fonctionnement comprend la surveillance des performances de ladite pile à combustible (110).

4. Procédé selon la revendication 2 ou la revendication 3, dans lequel ladite charge à courant inverse a lieu lorsque la surveillance des conditions de fonctionnement de ladite pile à combustible (110) indique une diminution des performances de ladite pile à combustible.

5. Procédé selon l'une quelconque des revendications 2 à 4, dans lequel la surveillance des conditions de fonctionnement comprend la surveillance de la tension de ladite pile à combustible (110).

6. Procédé selon l'une quelconque des revendications 1 à 5, dans lequel le fait de fournir par intermittence une charge à courant inverse contrôle la quantité de charge à courant inverse reçue par ladite pile à combustible (110).

7. Procédé selon l'une quelconque des revendications 1 à 5, dans lequel le fait de fournir par intermittence une charge à courant inverse comprend la sélection d'un nombre spécifique d'impulsions de courant inverse et de la durée de chaque impulsion de courant inverse.

8. Procédé selon la revendication 7, comprenant en outre la sélection dudit nombre spécifique d'impulsions de courant inverse et de la durée de chaque impulsion selon les conditions de fonctionnement de la pile à combustible surveillée (110).

9. Procédé selon l'une quelconque des revendications 1 à 8, dans lequel le fait de fournir par intermittence une charge à courant inverse augmente la quantité de charge reçue par ladite pile à combustible (110) lorsque les performances de ladite pile à combustible surveillée se détériorent.

10. Procédé selon l'une quelconque des revendications 1 à 8, dans lequel le fait de fournir par intermittence une charge à courant inverse réduit la quantité de charge reçue par ladite pile à combustible (110) lorsque les performances de ladite pile à combustible surveillée s'améliorent.

11. Procédé selon l'une quelconque des revendications 1 à 10, dans lequel le fait de fournir de l'oxydant à ladite cathode (130) s'effectue via une circulation d'air.

12. Procédé selon la revendication 11, dans lequel le fait de fournir par intermittence une charge à courant inverse comprend en outre l'augmentation du débit de circulation d'air lorsque de l'oxydant est fourni à ladite cathode (130).

13. Procédé selon l'une quelconque des revendications 1 à 10, dans lequel le fait de fournir de l'oxydant à ladite cathode (130) s'effectue via un liquide.

14. Procédé selon l'une quelconque des revendications 1 à 12, dans lequel ledit oxydant est de l'oxygène provenant de l'air.

15. Procédé selon la revendication 1, dans lequel ledit oxydant est de l'oxygène provenant de la décomposition de chlorate de potassium.

16. Procédé selon la revendication 1, dans lequel ledit oxydant est de l'oxygène provenant de la décomposition de chlorate de sodium.

17. Procédé selon la revendication 1, dans lequel ledit oxydant est de l'oxygène provenant de la décomposition de peroxyde d'hydrogène.

18. Procédé selon l'une quelconque des revendications 1 à 17, qui est appliqué afin de prétraiter ladite pile à combustible (110) .

19. Procédé selon l'une quelconque des revendications 1 à 17, qui est appliqué afin de rétablir les performances de ladite pile à combustible (110).

20. Procédé selon la revendication 2 ou l'une quelconque des revendications 3 à 17 lorsqu'elles dépendent de celle-ci, comprenant en outre
l'application de ladite charge à courant inverse à ladite pile à combustible (110) via un circuit d'alimentation électrique externe, selon les conditions de fonctionnement surveillées.

21. Procédé selon la revendication 20, dans lequel le fonctionnement de ladite pile à combustible (110) afin de fournir de l'énergie fournit de l'énergie audit circuit d'alimentation électrique externe qui fournit en outre de l'énergie à un circuit de charge externe.

22. Procédé selon la revendication 20, comprenant en outre la surveillance des conditions de fonctionnement d'un circuit d'alimentation électrique externe.

23. Procédé selon la revendication 20, comprenant en outre la surveillance des conditions de fonctionnement d'un circuit de charge externe.

24. Procédé selon la revendication 20, dans lequel un circuit d'alimentation électrique externe fournit de l'énergie à un circuit de charge lorsqu'une charge à courant inverse est fournie sélectivement à ladite pile à combustible (110).

25. Système de fonctionnement d'une pile à combustible (110), comprenant :
une pile à combustible (110) ayant une anode (120), un électrolyte (100) et une cathode (130),
un circuit d'alimentation électrique externe reliant ladite anode (120) et ladite cathode (130),
un premier dispositif d'alimentation destiné à fournir un combustible à ladite anode (120) ;
un second dispositif d'alimentation destiné à fournir un oxydant à ladite cathode (130) ; **caractérisé par**
un contrôleur (190) destiné à fournir par intermittence une charge à courant inverse à ladite pile à combustible (110) par le biais de ladite anode (120) et de ladite cathode (130) via ledit circuit d'alimentation électrique externe.

26. Système selon la revendication 25, dans lequel ladite pile à combustible (110) consomme une pile à combustible à base de carbone.

27. Procédé selon la revendication 26, dans lequel ladite pile à combustible à base de carbone (110) est une pile à combustible directe à méthanol (DMFC).

28. Système selon la revendication 25, dans lequel ladite pile à combustible (110) est une pile à combustible à hydrogène.

29. Système selon la revendication 28, dans lequel ladite pile à combustible à hydrogène utilise de l'hydrogène pur comme combustible.

30. Système selon la revendication 28, dans lequel ladite pile à combustible à hydrogène utilise de l'hydrogène contaminé avec du monoxyde de carbone (CO) comme combustible.

31. Système selon l'une quelconque des revendications 25 à 30, dans lequel ledit contrôleur est construit et agencé afin de surveiller les performances et le statut de fonctionnement de ladite pile à combustible (110).

32. Système selon l'une quelconque des revendications 25 à 31, dans lequel ledit contrôleur est construit et agencé afin de surveiller un courant de circuit de charge externe.

33. Système selon la revendication 25, dans lequel ledit second dispositif d'alimentation fournit de l'oxydant à ladite cathode (130) via une circulation d'air.

34. Système selon la revendication 25, dans lequel ledit second dispositif d'alimentation fournit de l'oxydant à ladite cathode (130) via un liquide.

35. Système selon la revendication 25, dans lequel ledit oxydant est de l'oxygène provenant de l'air.

36. Système selon la revendication 25, dans lequel ledit oxydant est de l'oxygène provenant de la décomposition de chlorate de potassium.

37. Système selon la revendication 25, dans lequel ledit oxydant est de l'oxygène provenant de la décomposition de chlorate de sodium.

38. Système selon la revendication 25, dans lequel ledit oxydant est de l'oxygène provenant de la décomposition de peroxyde d'hydrogène.

39. Système d'alimentation destiné à convertir un combustible en électricité, comprenant :
un système selon l'une quelconque des revendications 25 à 38 ;
un circuit d'alimentation électrique externe reliant ladite anode et ladite cathode (130) ; et un circuit de charge externe relié à ladite anode et à ladite cathode.
